# EUROPEAN PATENT SPECIFICATION

(11) **EP 2 141 048 B1**
(45) Date of publication and mention of the grant of the patent: **09.03.2011**
(21) Application number: 09164298.3
(22) Date of filing: 01.07.2009
(51) Int. Cl.: B60Q 1/00, G01S 13/93, H01Q 1/32

(54) **Vehicle lamp**
Fahrzeuglampe
Lampe de véhicule

(30) Priority: 01.07.2008 JP 2008172520
(43) Date of publication of application: 06.01.2010
(73) Proprietor: KOITO MANUFACTURING CO., LTD, Tokyo (JP)
(72) Inventor: Natsume, Kazunori c/o Koito Manufacturing Co., Ltd.,, Shizuoka-shi Shizuoka (JP)
(74) Representative: Grünecker, Kinkeldey, Stockmair & Schwanhäusser Anwaltssozietät

(56) References cited:
- EP-A- 0 603 690
- EP-A- 0 802 082
- JP-A- 2007 038 973
- JP-A- 2008 146 933
- US-A- 5 963 172
- US-B1- 6 198 455

## Description

### FIELD OF THE INVENTION

Apparatuses consistent with the present invention relate to a vehicle lamp having a radar which is used to obtain information surrounding a vehicle.

### BACKGROUND ART

A related art vehicle lamp has a lamp body, a front cover, and a radar (e.g., a laser radar) which is accommodated inside a lamp chamber (see, e.g., JP 2001-236808 A). The lamp chamber is defined by the lamp body and the front cover. The radar is used to obtain information on, for example, road conditions and surrounding vehicles.

In the related art vehicle lamp, however, it is difficult to arrange the radar inside the lamp chamber together with a lamp unit, especially when trying to reduce the size of the lamp chamber. Further, because the radar is fully exposed to view, the radar may detract from the aesthetics of the vehicle.

US-A-5 963 172 relates to a headlight with an integrated microwave antenna, wherein the headlight comprises an optical system, a headlight reflector, and a microwave system having a feeder element.

EP-A-0 802 082 relates to a lamp unit having a lamp, a reflector and a transmitting/receiving unit which transmits/receives signals.

### SUMMARY OF THE INVENTION

Illustrative aspects of the present invention provide a vehicle lamp which can make an effective use of a space inside a lamp chamber and has an improved appearance.

According to an illustrative aspect of the present invention, a vehicle lamp is provided. The vehicle lamp includes a lamp unit and a radar unit. The lamp unit includes a light source and a first reflector which reflects a light beam emitted from the light source. The radar unit includes a radar and a second reflector which reflects an electromagnetic wave transmitted from the radar. The second reflector is arranged such that the electromagnetic wave reflected by the second reflector is further reflected by the first reflector.

Other aspects and advantages of the invention will be apparent from the following description, the drawings and the claims.

### BRIEF DESCRIPTION OF THE DRAWINGS

Fig. 1 is a front view of a vehicle lamp according to an exemplary embodiment of the present invention; and

Fig. 2 is a sectional view taken along a line II-II in Fig. 1.

### DETAILED DESCRIPTION OF EXEMPLARY EMBODIMENTS OF INVENTION

Hereinafter, an exemplary embodiment of the present invention will be described in detail with reference to the drawings. The following exemplary embodiment is an example only and does not limit the scope of the present invention as defined by the claims.

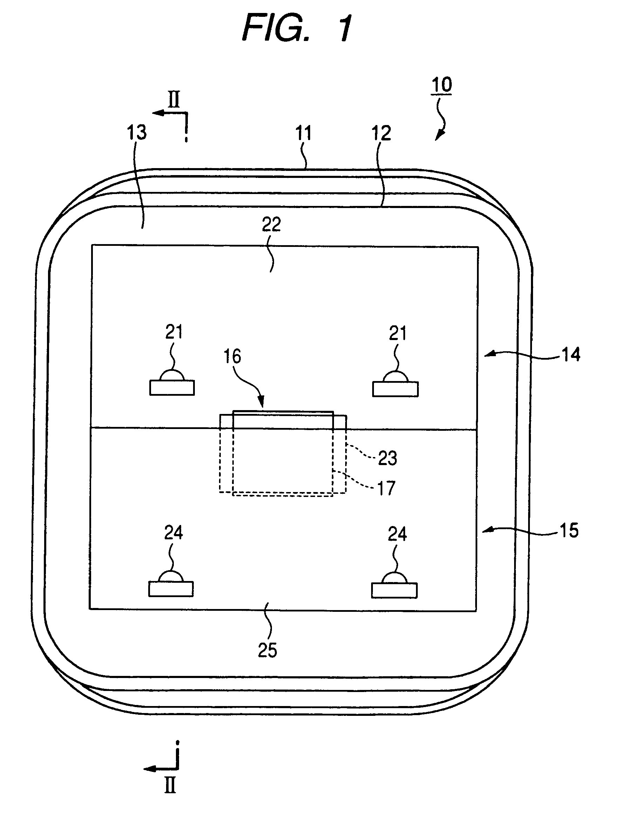

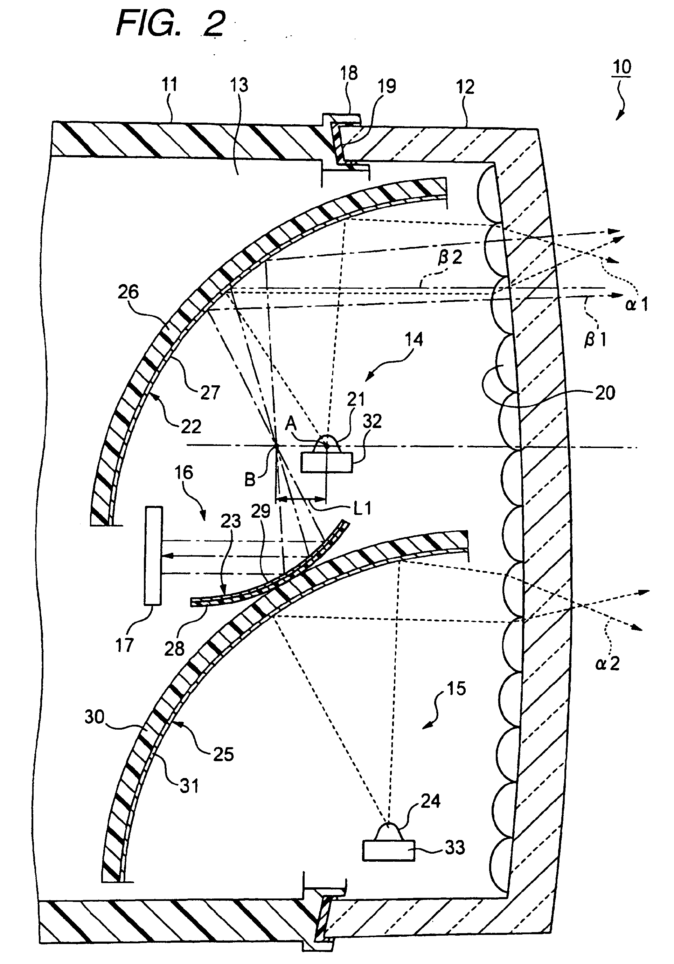

Fig. 1 is a front view of a vehicle lamp 10 according to an exemplary embodiment of the present invention, and Fig. 2 is a sectional view taken along the line II-II in Fig. 1. The vehicle lamp 10 according to this exemplary embodiment is a rear combination lamp. Accordingly, it is to be noted that a right-hand side in Fig. 2 is a back side of a vehicle body.

As shown in Figs. 1 and 2, the vehicle lamp 10 includes a lamp body 11 which is fixed to the vehicle body, a front cover 12 which defines a lamp chamber 13 together with the front cover 12, a first lamp unit 14, a second lamp unit 15 and a radar unit 16. Here, it is to be noted that, in this description, the terms "front" and "rear" in connection with the detailed configuration of the vehicle lamp 10 are used with reference to the front cover 12, and are defined independently from the front and rear of the vehicle body. That is, for example, the front side of the vehicle lamp 10 is where the front cover 12 is disposed. The first and second lamp units 14, 15 and the radar unit 16 are accommodated inside the lamp chamber 13. The lamp body 11 is made of a resin, and is configured to have a front opening. The front cover 12 is made of, for example, red or orange colored resin, and is attached to the lamp body 11 to cover the front opening of the lamp body 11.

The lamp body 11 has a front cover attaching portion 18 on the front end thereof, and the front cover 12 is fixed to the front cover attaching portion 18 via an adhesive 19 (e.g., a sealing agent). A rear face of the front cover 12 is formed with concave-convex diffusing steps 20.

The first lamp unit 14 is disposed in an upper region of the lamp chamber 13. The first lamp unit 14 includes first semiconductor light emitting devices 21 (hereinafter, first LEDs 21) and a first reflector 22. The radar unit 16 according to this exemplary embodiment is a millimeter wave radar unit which transmits millimeter waves to detect a distance to an object reflecting the millimeter wave or a relative speed of the object. The radar unit 16 is disposed in a central region of the lamp chamber 13, between the first lamp unit 14 and the second lamp unit 15. The radar unit 16 includes a millimeter wave radar 17 and a second reflector 23 which reflects millimeter waves from the millimeter wave radar 17 toward the first reflector 22. The second lamp unit 15 is disposed in a lower region of the lamp chamber 13. The second lamp unit 15 includes second semiconductor light emitting devices 24 (hereinafter, second LEDs 24) and a third reflector 25.

The first LEDs 21 are mounted on respective base plates 32 so as to be located at positions corresponding to a focal point of the first reflector 22. Similarly, the second LEDs 24 are mounted on respective base plates 33 so as to be located at positions corresponding to a focal point of the third reflector 25.

The first LEDs 21 emit light beams α 1 (see dashed lines in Fig. 2) toward the first reflector 22 when energized. The light beams α1 are reflected by the first reflector 22 to pass through the front cover 12 toward a region behind the vehicle body. Likewise, the second LEDs 24 emit light beams α2 toward the third reflector 25. The light beams α2 are reflected by the third reflector 25 to pass through the front cover 12 toward the region behind the vehicle body.

The first reflector 22 is disposed to be an upper portion of the first lamp unit 14. The first reflector 22 includes a resin-made reflector base 26 and a metallic reflecting layer 27. The reflector base 26 has a concave inner surface having a parabolic shape and facing the first LED 21. The reflecting layer 27 is formed by depositing aluminum (Al) or spattering chromium (Cr) or aluminum (Al) onto the inner surface of the reflector base 26.

In the sectional view of Fig. 2, the focal point of the first reflector 22 is at a position A at which the first LEDs 21 are disposed.

The second reflector 23 is disposed below the first lamp unit 14, and is disposed in a region outside the light emitting range of the first lamp unit 14. Further, the second reflector 23 disposed in front of the millimeter wave radar 17 to cover the millimeter wave radar 17 from view from the side of the front cover 12. The second reflector 23 is disposed at a rear surface of the third reflector 25. For example, a non-reflecting surface of the second reflector 23 may be disposed on an upper portion of the non-reflecting surface of the third reflector 25. By this arrangement, an upper portion of the third reflector 25 can conceal the radar unit 16 from view from the side of the front cover 12.

In another example, the second reflector 23 may be fixed to an attaching member other than the third reflector 25. In yet another example, the second reflector 23 may be formed as a one-piece structure together with the first reflector 22 and/or together with the millimeter wave radar 17.

The second reflector 23 includes a resin-made reflector base 28 and a metallic reflecting layer 29. The reflector base 28 has a concave inner surface having a parabolic shape and facing the first reflector 22. The reflecting layer 29 is formed by depositing Al, spattering Cr or Al, or affixing a metallic film on the inner surface of the reflector base 28. Alternatively, the entire second reflector 23 may be formed by die casting.

In the sectional view of Fig. 2, a focal point of the second reflector 23 is set at a position B. This focal point position B is near the focal point position A of the first LED 21, but is closer to the first reflector 22 than the focal point position A by a distance L1. This distance L1 is set to be in the range of, for example, about 10 mm to about 15 mm, based on an attenuation rate of the transmitting millimeter waves β1 and the receiving millimeter waves β2.

The millimeter wave radar 17 is disposed in a relatively small space between the first reflector 22 and the first LED 21 and behind the second reflector 23. The millimeter wave radar 17 transmits the millimeter waves β1 of, for example, about 76 GHz to about 77 GHz. Further, the millimeter wave radar 17 receives the millimeter waves β2 reflected by an object, and executes arithmetic processing for calculating, for example, a propagation time of the millimeter waves β2 or a frequency deviation generated by a Doppler effect.

Based on results of the arithmetic processing, the millimeter wave radar 17 determines a position of the object or a relative speed of the object with respect to a vehicle on which the vehicle lamp 10 is mounted, and generates an electric signal or the like indicating the presence of the object. Based on the electric signal, a control unit may then, for example, display on a multi-information display a notification to the driver that the object (e.g., a following vehicle) is approaching.

The millimeter waves β1 transmitted from the millimeter radar 17 are reflected by the second reflector 23, and pass through the focal point position B near the first LED 21 toward the first reflector 22. The millimeter waves β1 are then reflected by the first reflector 22 and pass through the front cover 12 toward the region behind the vehicle body.

Because the focal point position B of the second reflector 23 is near the focal point position A of the first LED 21, the light beams α1 from the first LEDs 21 and the millimeter waves β1 are both reflected by the first reflector 22 in a substantially same direction toward the region behind the vehicle body.

More precisely, because the focal point position B of the second reflector 23 is closer to the first reflector 22 than the focal point position A of the first reflector 22, the millimeter waves β1 are reflected by the first reflector 22 so as to be diffused in a wide range.

The third reflector 25 is disposed to be an upper portion of the second lamp unit 15. The third reflector 25 includes a resin-made reflector base 30 and a metallic reflecting layer 31 which are similar to the reflector base 26 and the reflecting layer 27 of the first reflector 22.

In the vehicle lamp 10 having the configuration described above, when the first and second LEDs 21, 24 are energized, the light beams α1, α2 are reflected by the first reflector 22 and the third reflector 25 so as to pass through the front cover 12 toward the region behind the vehicle body.

The millimeter wave radar 17 is activated when the engine of the vehicle is started. The millimeter waves β1 transmitted from the millimeter wave radar 17 are reflected by the second reflector 23 to pass through the focal point position B of the second reflector 23. The millimeter waves β1 are then reflected by the first reflector 22 so as to pass through the front cover 12 toward the region behind the vehicle body.

The millimeter waves β2 which are reflected from the object, enter the lamp chamber 13 again through the front cover 12, and are reflected by the first reflector 22. The millimeter waves β2 are then reflected by the second reflector 23, and are received by the millimeter radar 17.

As described above, according to the vehicle lamp 10 of the exemplary embodiment, the millimeter waves β1 transmitted from the millimeter radar 17 are reflected by the second reflector 23, which has the focal point B near the focal point A of the first reflector 22, and are further reflected by the first reflector 22 so as to be transmitted outward from the front cover 12.

According to this configuration, the millimeter wave radar 17 can be disposed within the lamp chamber 13 behind the first LED 21. Thus, the degree of freedom in layout of the millimeter wave radar 17 with respect to the first reflector 22 is increased, thereby allowing to make effective use of the space inside the lamp chamber 13. In addition, the radar unit 16 can be arranged in a region outside of the light emitting range of the first lamp unit 14, and can be prevented from being fully exposed to view. Thus, the aesthetic appearance of the vehicle lamp 10 can be improved. Further, the millimeter waves β1 from the millimeter wave radar 17 can be transmitted substantially in the same direction as the light beams α1 from the first LED 21 using the first reflector 22, thereby allowing to transmit the millimeter waves β1 in a certain direction.

More specifically, the millimeter wave radar 17 is disposed within a small space between the first LED 21 and the first reflector 22 so as to avoid the light reflecting area of the first reflector 22. Accordingly, the radar unit 16 as well as the entire lamp chamber 13 can be made more compact.

The focal point B of the second reflector 23 is set at a position which is closer to the first reflector 22 than the focal point A of the first reflector. According to this arrangement, the millimeter waves β1 are reflected by the first reflector 22 so as to be diffused in a wide range, thereby widening the range in which an object is detectable.

The second reflector 23 is disposed behind the third reflector 25 of the second lamp unit 15. Accordingly, the millimeter wave radar 17 can be disposed behind the light emitting area of the second lamp unit 15, whereby the space inside the lamp chamber 13 can be effectively used and the size of the lamp chamber 13 can be reduced. In addition, because the radar unit 16 can be concealed behind the third reflector 25, the aesthetic appearance of the vehicle lamp 10 can be improved.

While the present invention has been shown and described with reference to a certain exemplary embodiment thereof, it will be understood by those skilled in the art that various changes in form and details may be made therein without departing from the spirit and scope of the present invention as defined by the appended claims.

For example, the number of LEDs are not limited to the numbers of LEDs illustrated in the drawings. For example, one LED per reflector may be used, or a plurality of LEDs per reflector may be used, a number of the LEDs being suitably selected in accordance with a designed appearance or a desired amount of light. Moreover, a light source of the respective lamp units 14, 15 are not limited to LEDs, and may alternatively be a bulb-type light source.

Also, the radar unit 16 is not limited to a millimeter wave radar unit, and may alternatively be another type radar unit using electromagnetic waves of a different wavelength.

Furthermore, while the exemplary embodiment has been described in connection with a rear combination lamp, the present invention is also applicable to, for example, a headlamp unit or a front combination lamp.

Accordingly, these changes and modifications are included within the scope of the present invention as defined by the appended claims.

## Claims

1. A vehicle lamp (10) comprising:
a first lamp unit (14) comprising a first light source (21) and a first reflector (22) which reflects a light beam (α1) emitted from the first light source (21); and
a radar unit (16) comprising a radar (17) and a second reflector (23) which reflects an electromagnetic wave (β1) transmitted from the radar (17),
wherein the second reflector (23) is arranged such that the electromagnetic wave (β1) reflected by the second reflector (23) is further reflected by the first reflector (22),
**characterized in that**
the vehicle lamp further comprising a second lamp unit (15) comprising a second light source (24) and a third reflector (25) which reflects a light beam (α2) emitted from the second light source (24),
wherein the second reflector (23) is disposed behind the third reflector (25).

2. The vehicle lamp (10) according to claim 1, wherein the radar (17) is disposed between the first light source (21) and the first reflector (22) and at a position outside of a light reflecting area of the first reflector (22).

3. The vehicle lamp (10) according to claim 1 or 2, wherein a focal point (B) of the second reflector (23) is disposed near a focal point (A) of the first reflector (22).

4. The vehicle lamp (10) according to claim 3, wherein the focal point (B) of the second reflector (23) is closer to the first reflector (22) than the focal point (A) of the first reflector (22).

5. The vehicle lamp (10) according to claim 3 or 4, wherein the first light source (21) is disposed on the focal point (A) of the first reflector (22).

6. The vehicle lamp (10) according to claim 1, wherein the second reflector (23) is disposed between the first reflector (22) and a non-reflecting side of the third reflector (25).

7. The vehicle lamp (10) according to any one of claims 1 to 5, further comprising:
a lamp body (11) having a front opening; and
a front cover (12) which is attached to the lamp body (11) to cover the front opening,
wherein the lamp body (11) and the front cover (12) together form a lamp chamber (13) in which the first lamp unit (14) and the radar unit (16) are accommodated, and
the first reflector (22) reflects the light beam (α1) and the electromagnetic wave (β1) toward the front cover (12).

8. The vehicle lamp (10) according to claim 1 or 6, further comprising:
a lamp body (11) having a front opening; and
a front cover (12) which is attached to the lamp body (11) to cover the front opening,
wherein the lamp body (11) and the front cover (12) together form a lamp chamber (13) in which the first lamp unit (14), the second lamp unit (15), and the radar unit (16) are accommodated,
the first reflector (22) reflects the light beam (α1) emitted from the first light source (21) and the electromagnetic wave (β1) toward the front cover (12), and
the third reflector (25) reflects the light beam (α2) emitted from the second light source (24) toward the front cover (12).

9. The vehicle lamp according to any one of the preceding claims, the electromagnetic wave (β1) comprises a millimeter wave.

## Patentansprüche

1. Fahrzeuglampe (10), die umfasst:
eine erste Lampeneinheit (14), die eine erste Lichtquelle (21) und einen ersten Reflektor (22) umfasst, der einen von der ersten Lichtquelle (21) emittierten Lichtstrahl (α1) reflektiert; und
eine Radareinheit (16), die eine Radareinrichtung (17) und einen zweiten Reflektor (23) umfasst, der eine von der Radareinrichtung (17) gesendete elektromagnetische Welle (β1) reflektiert,
wobei der zweite Reflektor (23) so eingerichtet ist, dass die durch den zweiten Reflektor (23) reflektierte elektromagnetische Welle (β1) durch den ersten Reflektor (22) weiter reflektiert wird,
**dadurch gekennzeichnet, dass**
die Fahrzeuglampe des Weiteren eine zweite Lampeneinheit (15) umfasst, die eine zweite Lichtquelle (24) und einen dritten Reflektor (25) umfasst, der einen von der zweiten Lichtquelle (24) emittierten Lichtstrahl (α2) reflektiert,
wobei der zweite Reflektor (23) hinter dem dritten Reflektor (25) angeordnet ist.

2. Fahrzeuglampe (10) nach Anspruch 1, wobei die Radareinrichtung (17) zwischen der ersten Lichtquelle (21) und dem ersten Reflektor (22) sowie an einer Position außerhalb einer Lichtreflektionsfläche des ersten Reflektors (22) angeordnet ist.

3. Fahrzeuglampe (10) nach Anspruch 1 oder 2, wobei ein Brennpunkt (B) des zweiten Reflektors (23) in der Nähe eines Brennpunktes (A) des ersten Reflektors (22) angeordnet ist.

4. Fahrzeuglampe (10) nach Anspruch 3, wobei der Brennpunkt (B) des zweiten Reflektors (23) näher an dem ersten Reflektor (22) liegt als der Brennpunkt (A) des ersten Reflektors (22).

5. Fahrzeuglampe (10) nach Anspruch 3 oder 4, wobei die erste Lichtquelle (21) an dem Brennpunkt (A) des ersten Reflektors (22) angeordnet ist.

6. Fahrzeuglampe (10) nach Anspruch 1, wobei der zweite Reflektor (23) zwischen dem ersten Reflektor (22) und einer nichtreflektierenden Seite des dritten Reflektors (25) angeordnet ist.

7. Fahrzeuglampe (10) nach einem der Ansprüche 1 bis 5, die des Weiteren umfasst:
ein Lampengehäuse (11), das eine vordere Öffnung hat; und
eine vordere Abdeckung (12), die an dem Lampengehäuse (11) angebracht ist, um die vordere Öffnung abzudecken,
wobei das Lampengehäuse (11) und die vordere Abdeckung (12) zusammen eine Lampenkammer (13) bilden, in der die erste Lampeneinheit (14) und die Radareinheit (16) aufgenommen sind, und
der erste Reflektor (22) den Lichtstrahl (α1) und die elektromagnetische Welle (β1) auf die vordere Abdeckung (12) zu reflektiert.

8. Fahrzeuglampe (10) nach einem der Ansprüche 1 oder 6, die des Weiteren umfasst:
ein Lampengehäuse (11), das eine vordere Öffnung hat; und
eine vordere Abdeckung (12), die an dem Lampengehäuse (11) angebracht ist, um die vordere Öffnung abzudecken,
wobei das Lampengehäuse (11) und die vordere Abdeckung (12) zusammen eine Lampenkammer (13) bilden, in der die erste Lampeneinheit (14), die zweite Lampeneinheit (15) und die Radareinheit (16) aufgenommen sind,
der erste Reflektor (22) den von der ersten Lichtquelle (21) emittierten Lichtstrahl (α1) und die elektromagnetische Welle (β1) auf die vordere Abdeckung (12) zu reflektiert, und
der dritte Reflektor (25) den von der zweiten Lichtquelle (24) emittierten Lichtstrahl (α2) auf die vordere Abdeckung (12) zu reflektiert.

9. Fahrzeuglampe nach einem der vorangehenden Ansprüche, wobei die elektromagnetische Welle (β1) eine Millimeterwelle umfasst.

## Revendications

1. Lampe de véhicule (10) comprenant :
une première unité de lampe (14) comprenant une première source de lumière (21) et un premier réflecteur (22) qui réfléchit un faisceau de lumière (α1) émis par la première source de lumière (21) ; et
une unité de radar (16) comprenant un radar (17) et un deuxième réflecteur (23) qui réfléchit une onde électromagnétique (β1) transmise par le radar (17),
dans laquelle le deuxième réflecteur (23) est agencé de façon que l'onde électromagnétique (β1) réfléchie par le deuxième réflecteur (23) soit également réfléchie par le premier réflecteur (22),
**caractérisée en ce que**
la lampe de véhicule comprend en outre une deuxième unité de lampe (15) comprenant une deuxième source de lumière (24) et un troisième réflecteur (25) qui réfléchit un faisceau de lumière (α2) émis par la deuxième source de lumière (24),
dans laquelle le deuxième réflecteur (23) est disposé derrière le troisième réflecteur (25).

2. Lampe de véhicule (10) selon la revendication 1, dans laquelle le radar (17) est disposé entre la première source de lumière (21) et le premier réflecteur (22) et dans une position extérieure à la zone de réflexion de lumière du premier réflecteur (22).

3. Lampe de véhicule (10) selon la revendication 1 ou 2, dans laquelle le foyer (B) du deuxième réflecteur (23) est disposé près du foyer (A) du premier réflecteur (22).

4. Lampe de véhicule (10) selon la revendication 3, dans laquelle le foyer (B) du deuxième réflecteur (23) est plus proche du premier réflecteur (22) que le foyer (A) du premier réflecteur (22).

5. Lampe de véhicule (10) selon la revendication 3 ou 4, dans laquelle la première source de lumière (21) est située au foyer (A) du premier réflecteur (22).

6. Lampe de véhicule (10) selon la revendication 1, dans laquelle le deuxième réflecteur (23) est disposé entre le premier réflecteur (22) et une face non réfléchissante du troisième réflecteur (25).

7. Lampe de véhicule (10) selon l'une quelconque des revendications 1 à 5, comprenant en outre :
un corps de lampe (11) ayant une ouverture avant ; et
un couvercle avant (12) fixé au corps de lampe (11) afin de recouvrir l'ouverture avant,
dans laquelle le corps de lampe (11) et le couvercle avant (12) forment ensemble une chambre de lampe (13) dans laquelle sont reçues la première unité de lampe (14) et l'unité de radar (16), et
le premier réflecteur (22) réfléchit vers le couvercle avant (12) le faisceau de lumière (α1) et l'onde électromagnétique (β1).

8. Lampe de véhicule (10) selon la revendication 1 ou 6, comprenant en outre
un corps de lampe (11) ayant une ouverture avant ; et
un couvercle avant (12) fixé au corps de lampe (11) afin de recouvrir l'ouverture avant,
dans laquelle le corps de lampe (11) et le couvercle avant (12) forment ensemble une chambre de lampe (13) dans laquelle sont reçues la première unité de lampe (14), la deuxième unité de lampe (15) et l'unité de radar (16),
le premier réflecteur (22) réfléchit vers le couvercle avant (12) le faisceau de lumière (α1) émis par la première source de lumière (21) et l'onde électromagnétique (β1), et
le troisième réflecteur (25) réfléchit vers le couvercle avant (12) le faisceau de lumière (α2) émis par la deuxième source de lumière (24).

9. Lampe de véhicule selon l'une quelconque des revendications précédentes, l'onde électromagnétique (β1) étant constituée d'une onde millimétrique.
